# EUROPÄISCHE PATENTSCHRIFT

(11) **EP 0 928 314 B1**
(45) Veröffentlichungstag und Bekanntmachung des Hinweises auf die Patenterteilung: **10.01.2001**
(21) Anmeldenummer: 97942918.0
(22) Anmeldetag: 12.09.1997
(51) Int. Cl.: C08L 25/04

(54) **THERMOPLASTISCHE FORMMASSEN**
THERMOPLASTIC MOULDING COMPOUNDS
MATIERES MOULABLES THERMOPLATIQUES

(30) Priorität: 26.09.1996 DE 19639592
(43) Veröffentlichungstag der Anmeldung: 14.07.1999
(73) Patentinhaber: BASF AKTIENGESELLSCHAFT, 67056 Ludwigshafen (DE)
(72) Erfinder: ITTEMANN, Peter, D-68623 Lampertheim (DE); NEUMANN, Rainer, D-67112 Mutterstadt (DE); SEIBRING, Joachim, D-67251 Freinsheim (DE); ROSENAU, Bernhard, D-67434 Neustadt (DE); KÖTTING, Manfred, D-67112 Mutterstadt (DE); GINSS, Christophe, D-69469 Weinheim (DE); GÜNTHERBERG, Norbert, D-67346 Speyer (DE); MEYER, Christian, D-64331 Weiterstadt (DE)
(86) Internationale Anmeldenummer: EP9705001
(87) Internationale Veröffentlichungsnummer: WO9813420

(56) Entgegenhaltungen:
- EP-A- 0 011 158
- EP-A- 0 074 051
- EP-A- 0 485 793
- EP-A- 0 712 894

## Beschreibung

Die vorliegende Erfindung betrifft thermoplastische Formmassen, enthaltend, bezogen auf das Gesamtgewicht der Formmasse,
A) 72 bis 88,5 Gew.-% einer thermoplastischen Polymerisates aus, bezogen auf A),
   a1) 50 bis 100 Gew.-% Styrol oder α-Methylstyrol oder deren Mischungen,
   a2) 0 bis 50 Gew.-% Acrylnitril,
   a3) 0 bis 50 Gew.-% eines oder mehrerer weiter monoethylenisch ungesättigter Monomeren,
B) 10 bis 20 Gew.-% eines ersten Pfropfpolymerisates mit einem mittleren Teilchendurchmesser d₅₀ von 400 bis 600 nm, aus, bezogen auf B),
   b1) 30 bis 90 Gew.-% eines kautschukelastischen Pfropfkerns aus, bezogen auf b1),
      b11) 80 bis 99,99 Gew.-% n-Butylacrylat,
      b12) 0,01 bis 20 Gew.-% mindestens eines vernetzenden Monomeren,
      b13) 0 bis 40 Gew.-% eines oder mehrerer weiterer monoethylenisch ungesättigter Monomeren,
   b2) 10 bis 70 Gew.-% einer Pfropfschale aus, bezogen auf b2),
      b21) 50 bis 100 Gew.-% Styrol oder α-Methylstyrol oder deren Mischungen,
      b22) 0 bis 50 Gew.-% Acrylnitril,
      b23) 0 bis 50 Gew.-% eines oder mehrerer weiterer monoethylenisch ungesättigter Monomeren,
C) 1,5 bis 8 Gew.-% eines zweiten Pfropfpolymerisates mit bimodaler Teilchengrößenverteilung, wobei die mittleren Teilchendurchmesser d₅₀ bei 25 bis 200 nm einerseits und 350 bis 550 nm andererseits liegen, aus, bezogen auf C),
   c1) 30 bis 90 Gew.-% eines kautschukelastischen Pfropfkerns aus, bezogen auf c1),
      c11) 50 bis 100 Gew.-% Butadien oder Isopren oder deren Mischungen,
      c12) 0 bis 50 Gew.-% eines oder mehrerer weiterer monoethylenisch ungesättigter Monomeren,
   c2) 10 bis 70 Gew.-% einer Pfropfschale aus, bezogen auf c2)
      c21) 50 bis 100 Gew.-% Styrol oder α-Methylstyrol oder deren Mischungen,
      c22) 0 bis 50 Gew.-% Acrylnitril,
      c23) 0 bis 50 Gew.-% eines oder mehrerer weiterer monoethylenisch ungesättigter Monomeren.
D) 0 bis 50 Gew.-% Gleit- oder Entformungsmittel, Pigmente, Farbstoffe, Flammschutzmittel, Antioxidantien, Stabilisatoren gegen Lichteinwirkung, faser- oder pulverförmige Füll- oder Verstärkungsmittel oder Antistatika, oder andere Zusatzstoffe, oder deren Mischungen,
wobei die Summe der Pfropfpolymerisate B) und C) 11,5 bis 25 Gew.-% der Summe der drei Komponenten A), B) und C) ausmacht,
und wobei sich die Summe der vier Komponenten A) bis D) zu 100 Gew.-% ergänzt.

Weiterhin betrifft die Erfindung die Verwendung der thermoplastischen Formmassen zur Herstellung spezieller Formteile sowie die aus den thermoplastischen Formmassen hergestellten speziellen Formteile.

Formteile aus ABS (Polybutadienkautschuk-Partikel, gepfropft mit Polystyrolacrylnitril, in Polystyrolacrylnitril-Matrix) zeichnen sich durch gute mechanische Eigenschaften aus, insbesondere - bedingt durch die niedrige Glasübergangstemperatur Tg des Polybutadiens - durch gute Schlagzähigkeiten auch bei tiefen Temperaturen.

Es hat sich gezeigt, daß es für die Herstellung von Formteilen, insbesondere im Spritzgießverfahren, günstig ist, wenn in der ABS-Formmasse nebeneinander kleine und große Kautschukpartikel vorliegen. Solche Formmassen sind beispielsweise in der DE-OS 24 27 960 beschrieben. Aus Formmassen mit einer solchen bimodalen Teilchengrößenverteilung des Kautschuks können aufgrund ihrer guten Fließfähigkeit besonders vorteilhaft solche Spritzgußformteile hergestellt werden, die komplexe Geometrien aufweisen, etwa Gehäuseteile und Frontblenden für Geräte, elektrische Schalter, Schalter und Installationskästen.

Nachteilig an Formteilen aus ABS ist ihre nicht in vollem Umfang zufriedenstellende Beständigkeit gegen Licht, Sauerstoff und andere Witterungseinflüsse, bedingt, durch das Vorhandensein von Doppelbindungen im Polybutadien. Daher neigen ABS-Formteile bei Bewitterung in manchen Fällen zu Verfärbungen der Oberfläche durch Vergilbung und Auskreiden. Weiterhin können sich die mechanischen Eigenschaften, insbesondere die Schlagzähigkeit, verschlechtern.

Formteile aus ASA (Polyalkylacrylatkautschuk-Partikel, gepfropft mit Polystyrolacrylnitril, in Polystyrolacrylnitril-Matrix) weisen diese Nachteile nicht auf, da Acrylatkautschuk keine bewitterungsempfindlichen Doppelbindungen enthält. ASA-Formteile sind demnach überaus alterungs- und witterungsbeständig. ASA-Formmassen sind beispielsweise in der DE-OS 12 60 135 beschrieben.

Nachteilig an Formteilen aus ASA sind ihre für manche Anwendungen unzureichenden mechanischen Eigenschaften, insbesondere die im Vergleich zu ABS-Formteilen geringere Schlagzähigkeit bei tiefen Temperaturen (aufgrund der höheren Tg der Polyacrylatkautschuke).

Aus der DE-OS 29 01 576 sind Formmassen bekannt, die aus einer SAN-Matrix, einem mit SAN gepfropften Polybutadienkautschuk mit einer mittleren Teilchengröße d₅₀ von 200 bis 450 nm, und einem mit SAN gepfropften kleinteiligen Polyalkylacrylatkautschuk mit einer mittleren Teilchengröße d₅₀ von 50 bis 150 nm, bestehen. Solche Formmassen sind hinsichtlich ihrer mechanischen Eigenschaften und insbesondere bezüglich ihrer Witterungsbeständigkeit (Vergilbungsneigung) nicht in vollem Umfang zufriedenstellend.

Die EP-A 52 732 offenbart Formmassen aus einer SAN-Matrix, einem mit SAN gepfropften großteiligen Polybutadienkautschuk mit einem mittleren Teilchendruchmesser d₅₀ von 500 bis 5000 nm, und einem mit SAN gepfropften Polyalkylacrylat- oder Polybutadienkautschuk mit mittleren Teilchendruchmesser d₅₀ von 50 bis 180 nm einerseits und 250 bis 600 nm andererseits. Auch diese Formmassen können hinsichtlich ihrer Witterungsbeständigkeit nicht voll befriedigen.

Der Erfindung lag die Aufgabe zugrunde, den geschilderten Nachteilen abzuhelfen. Insbesondere sollten Formmassen mit guter Fließfähigkeit bereitgestellt werden, aus denen sich Formteile mit guten mechanischen Eigenschaften und ausreichender Alterungs- und Witterungsbeständigkeit herstellen lassen, insbesondere Formteile mit einem ausgewogenen Verhältnis von Schlagzähigkeit und Vergilbungsneigung.

Demgemäß wurden die eingangs definierten thermoplastischen Formmassen gefunden. Weiterhin wurde die Verwendung der Formmassen zur Herstellung spezieller Formteile sowie spezielle Formteile aus den Formmassen gefunden.

Die Komponente A) der erfindungsgemäßen Formmasse ist mit einem Anteil von 72 bis 88,5, bevorzugt 73 bis 85 und besonders bevorzugt 75 bis 83 Gew.-%, bezogen auf die Summe der Komponenten A), B), C) und D), enthalten. Der Bestandteil A) ist ein thermoplastisches Polymerisat, das aus
a₁) 50 bis 100, bevorzugt 55 bis 95 und besonders bevorzugt 60 bis 85 Gew.-% Styrol oder α-Methylstyrol oder deren Mischungen,
a₂) 0 bis 50, bevorzugt 5 bis 45 und besonders bevorzugt 15 bis 40 Gew.-% Acrylnitril, sowie
a₃) 0 bis 50, bevorzugt 0 bis 40 Gew.-% eines oder mehrerer weiterer monoethylenisch ungesättigter Monomeren,
jeweils bezogen auf die Komponente A), besteht. Als weitere Monomere a3) kommen die weiter unten für die Komponente b13) genannten Monomere in Betracht, wobei aus der Aufzählung der Monomeren b13) die Monomeren a1) und a2) naturgemäß auszunehmen sind.

Die Polymeren A), die wegen ihrer Hauptkomponenten Styrol und Acrylnitril allgemein auch als SAN-Polymere bezeichnet werden, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse (Gewichtsmittel) von etwa 40000 bis 2000000. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Die Komponente B) der Formmassen ist mit einem Anteil von 10 bis 20, bevorzugt 12 bis 18 und besonders bevorzugt 12,5 bis 17 Gew.-%, bezogen auf die Summe der Komponenten A), B), C) und D), enthalten.

Die Komponente B) ist ein erstes Pfropfpolymerisat mit einem mittleren Teilchendurchmesser d₅₀ von 400 bis 600 nm aus, bezogen auf B),
b1) 30 bis 90, bevorzugt 40 bis 80 und besonders bevorzugt 45 bis 75 Gew.-% eines kautschukelastischen Pfropfkerns b1), und
b2) 10 bis 70, bevorzugt 20 bis 65 und besonders bevorzugt 25 bis 60 Gew.-% einer Pfropfschale b2).

Der Pfropfkern b1) ist aufgebaut aus, bezogen auf b1),
b11) 80 bis 99,99, bevorzugt 85 bis 99,5 und besonders bevorzugt 90 bis 99 Gew.-% n-Butylacrylat,
b12) 0,001 bis 20, bevorzugt 0,5 bis 10 und besonders bevorzugt 1 bis 5 Gew.-% mindestens eines vernetzenden Monomeren,
b13) 0 bis 40, bevorzugt 0 bis 20 und besonders bevorzugt 0 bis 10 Gew.-% eines oder mehrerer weiterer monoethylenisch ungesättigter Monomeren.

Vernetzende Monomere b12) sind bi- oder polyfunktionelle Comonomere, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel 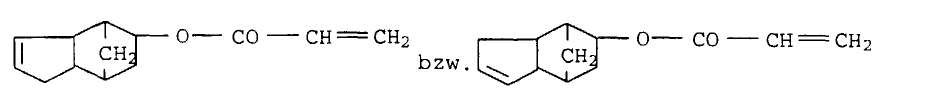 der unter dem Namen Dihydrodicyclopentadienylacrylat bekannt ist, sowie die Allylester der Acrylsäure und der Methacrylsäure.

Der Bestandteil b1) der Formmassen kann außerdem auf Kosten der Monomeren b11) und b12) weitere Monomere b13) enthalten, welche die mechanischen und thermischen Eigenschaften des Kerns in einem gewissen Bereich variieren. Als Beispiele für solche monoethylenisch ungesättigten Comonomere seien genannt:

vinylaromatische Monomere wie Styrol, Styrolderivate der allgemeinen Formel I 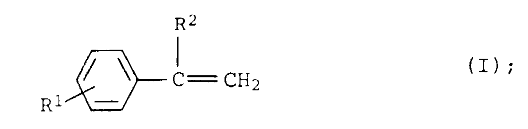 in der R¹ und R² für Wasserstoff oder C₁-C₈-Alkyl stehen;
Methacrylnitril, Acrylnitril;
Acrylsäure, Methacrylsäure, weiterhin Dicarbonsäuren wie Maleinsäure und Fumarsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;
C₁-C₁₀-Alkylester der Acrylsäure und der Methacrylsäure wie Methyl(meth)acrylat, Ethyl(meth)acrylat, n-Propyl(meth)acrylat, i-Propyl(meth)acrylat, n-Butyl(meth)acrylat, Isobutyl(meth)acrylat, sek.-Butyl(meth)acrylat, tert.-Butyl(meth)acrylat, Ethylhexyl(meth)acrylat sowie Hydroxyethylacrylat;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
N-substituierte Maleinimide wie N-Methyl-, N-Phenyl- und N-Cyclohexylmaleinimid;
ungesättigte Ether wie Vinylmethylether
sowie Mischungen dieser Monomeren.

Die Pfropfschale b2) ist aufgebaut aus, bezogen auf b2),
b21) 50 bis 100, bevorzugt 55 bis 95 und besonders bevorzugt 60 bis 90 Gew.-% Styrol oder α-Methylstyrol oder deren Mischungen,
b22) 0 bis 50, bevorzugt 5 bis 45 und besonders bevorzugt 10 bis 40 Gew.-% Acrylnitril,
b23) 0 bis 50, bevorzugt 0 bis 40 und besonders bevorzugt 0 bis 20 Gew.-% eines oder mehrerer weiterer monoethylenisch ungesättigter Monomerer.

Als weitere Monomere b23) kommen die weiter oben für die Komponente b13) genannten Monomere in Betracht, wobei aus der Aufzählung der Monomeren b13) die Monomeren b21) und b22) naturgemäß auszunehmen sind.

Die Pfropfpolymerisate B) sind in an sich bekannter Weise erhältlich, vorzugsweise durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen.

Vorzugsweise verwendet man zur Herstellung der Dispersion soviel Wasser, daß die fertige Dispersion einen Feststoffgehalt von 20 bis 50 Gew.-% hat.

Als Polymerisationsinitiatoren kommen vorzugsweise Radikalbildner, beispielsweise Peroxide wie bevorzugt Peroxosulfate (etwa Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

Ferner kann man Molekulargewichtsregler wie z.B. Ethylhexylthioglycolat, t-Dodecylmercaptan, Terpinole und dimeres α-Methylstyrol mitverwenden.

Zur Einhaltung eines konstant bleibenden pH-Wertes, der vorzugsweise bei 6 bis 9 liegt, kann man Puffersubstanzen wie Na₂HPO₄/NaH₂PO₄ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Man kann den Pfropfkern besonders bevorzugt auch durch Polymerisation der Monomeren bl) in Gegenwart eines feinteiligen Kautschuklatex herstellen (sog. "Saatlatex-Fahrweise" der Polymerisation).

Prinzipiell ist es auch möglich, den Pfropfkern b1) nach einem anderen Verfahren als dem der Emulsionspolymerisation herzustellen, z.B. durch Masse- oder Lösungspolymerisation, und die erhaltenen Polymerisate nachträglich zu emulgieren. Auch die Mikrosuspensionspolymerisation ist geeignet, wobei bevorzugt öllösliche Initiatoren wie Lauroylperoxid und t-Butylperpivalat verwendet werden. Die Verfahren hierfür sind bekannt.

Die Herstellung der Pfropfschale b2) kann unter den gleichen Bedingungen wie die Herstellung des Pfropfkerns b1) erfolgen, wobei man die Hülle b2) in einem oder mehreren Verfahrensschritten herstellen kann. Beispielsweise kann man zunächst Styrol bzw. α-Methylstyrol alleine und danach Styrol und Acrylnitril in zwei aufeinander folgenden Schritten polymerisieren. Weitere Einzelheiten zur Herstellung der Pfropfpolymerisate B) sind in den DE-OS 12 60 135 und 31 49 358 beschrieben.

Man stimmt die Reaktionsbedingungen in an sich bekannter Weise so aufeinander ab, daß die Polymerisat-Teilchen B) einen möglichst einheitlichen Durchmesser d₅₀ im Bereich von 400 bis 600, besonders von 450 bis 550 nm haben.

Die Komponente C) der Formmassen ist mit einem Anteil von 1,5 bis 8, bevorzugt 2 bis 7 und besonders bevorzugt 2,5 bis 6 Gew.-%, bezogen auf die Summe der Komponenten A), B), C) und D), enthalten.

Die Komponente C) ist ein zweites Pfropfpolymerisat mit einer bimodalen Teilchengrößenverteilung, wobei die mittleren Teilchendurchmesser d₅₀ bei 25 bis 200 nm einerseits und 350 bis 550 nm andererseits liegen, aus, bezogen auf C)
c1) 30 bis 90, bevorzugt 35 bis 85 und besonders bevorzugt 40 bis 75 Gew.-% eines kautschukelastischen Pfropfkerns c1), und
c2) 10 bis 70, bevorzugt 15 bis 65 und besonders bevorzugt 25 bis 60 Gew.-% einer Pfropfschale c2).

Der Pfropfkern c1) ist aufgebaut aus, bezogen auf c1),
c11) 50 bis 100, bevorzugt 80 bis 100 und besonders bevorzugt 100 Gew.-% Butadien oder Isopren oder deren Mischungen
c12) 0 bis 50, bevorzugt 0 bis 20 und besonders bevorzugt 0 Gew.-% eines oder mehrerer weiterer monoethylenisch ungesättigter Monomeren.

Die Pfropfschale c2) ist aufgebaut aus, bezogen auf c2),
c21) 50 bis 100, bevorzugt 55 bis 95 und besonders bevorzugt 60 bis 90 Gew.-% Styrol oder α-Methylstyrol oder deren Mischungen,
c22) 0 bis 50, bevorzugt 5 bis 45 und besonders bevorzugt 10 bis 40 Gew.-% Acrylnitril,
c23) 0 bis 50, bevorzugt 0 bis 40 und besonders bevorzugt 0 bis 20 Gew.-% eines oder mehrerer weiterer monoethylenisch ungesättigter Monomerer.

Als weitere Monomere c23) kommen die weiter oben für die Komponente b13) genannten Monomere in Betracht.

Die Pfropfschale c2) ist demnach definiert wie unter b2) beschrieben. Jedoch können sich die Pfropfschalen b2) und c2) hinsichtlich der Art und Menge der verwendeten Monomeren durchaus unterscheiden.

Für die Herstellung der Pfropfpolymerisate C) gilt in der Regel das weiter oben zur Herstellung der Pfropfpolymerisate B) Gesagte, mit Ausnahme des Teilchendurchmessers.

Man stimmt die Reaktionsbedingungen so aufeinander ab, daß die Polymerisat-Teilchen C) eine bimodale Teilchengrößenverteilung aufweisen, also eine Größenverteilung mit zwei Maxima. Die mittleren Teilchendurchmesser dso betragen 25 bis 200, bevorzugt 60 bis 140 und besonders bevorzugt 70 bis 120 nm einerseits, und 350 bis 550, bevorzugt 400 bis 500 und besonders bevorzugt 430 bis 470 nm andererseits. Einzelheiten sind in der DE-OS 24 27 960 beschrieben.

Beispielsweise kann wie folgt vorgegangen werden: Man polymerisiert die Monomeren c1), welche den Kern aufbauen, bis zu einem Umsatz von üblicherweise mindestens 90, bevorzugt mindestens 95 %, bezogen auf die eingesetzten Monomeren. Dieser Umsatz ist in der Regel nach 4 bis 20 Stunden erreicht.

Der auf diese Weise erhaltene Kautschuklatex hat eine mittlere Teilchengröße d₅₀ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Ethylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der erhaltene teilagglomerierte Kautschuklatex ist verhältnismäßig stabil, so daß er ohne weiteres gelagert und transportiert werden kann, ohne daß Koagulation eintritt.

Die Pfropfung des Kerns c1) mit der Pfropfschale c2) erfolgt in an sich bekannter Weise, beispielsweise im gleichen System wie die Herstellung des Pfropfkerns c1).

Soweit bei der Pfropfung der Kerne b1) bzw. c1) nicht gepfropfte Monomere aus den Monomeren b2) bzw. c2) entstehen, werden diese Mengen, die in der Regel unter 10 Gew.-% von b2) bzw. c2) liegen, der Masse der Komponente B) bzw. C) zugeordnet.

Erfindungsgemäß beträgt die Summe der Pfropfpolymerisate B) und C) 11,5 bis 25, bevorzugt 15 bis 24 und besonders bevorzugt 16 bis 22 Gew.-%, bezogen auf die Summe der drei Komponenten A), B) und C).

Die Komponente D) der Formmassen ist mit einem Anteil von 0 bis 50, bevorzugt 0 bis 20 und besonders bevorzugt 0 bis 10 Gew.-%, bezogen auf die Summe der Komponenten A), B), C) und D), enthalten.

Die Komponente D) umfaßt Gleit- oder Entformungsmittel, Pigmente, Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide sowie Siliconöle, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigemente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol^{®} oder Irganox^{®} im Handel erhältlich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin^{®} kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester und Glycerinmono- und -distearate, sowie deren Mischungen.

Die einzelnen Zusatzstoffe werden in den jeweils üblichen Mengen verwendet, so daß sich nähere Angaben hierzu erübrigen.

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Aus den Formmassen lassen sich Formkörper aller Art herstellen, insbesondere Spritzguß-Formteile, ganz besonders solche mit komplexen Geometrien wie Gehäuseteile oder elektrische Schalter. Desweiteren können die erfindungsgmäßen Formmassen zur Herstellung von Frontblenden für Haushaltsgeräte, zur Herstellung von Blenden, Schaltern oder Abdeckungen im Elektrosektor oder zur Herstellung von Installationskästen für elektrische Vorrichtungen im Außenbereich-verwendet werden. Die Formteile zeichnen sich durch eine Kombination von hoher Witterungsbeständigkeit (geringe Vergilbungsneigung) und guten mechanischen Eigenschaften (hohe Schlagzähigkeit) aus.

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der d₁₀-Wert gibt denjenigen Teilchendurchmesser an, bei dem 10 Gew.-% aller Teilchen einen kleineren und 90 Gew.-% einen größeren Durchmesser haben. Umgekehrt gilt für den d₉₀-Wert, daß 90 Gew.-% aller Teilchen einen kleineren und 10 Gew.-% einen größeren Durchmesser haben als derjenige Durchmesser, der dem d₉₀-Wert entspricht. Der gewichtsmittlere Teilchendurchmesser d₅₀ bzw. volumenmittlere Teilchendurchmesser D₅₀ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. d₁₀-, d₅₀- und d₉₀-Wert charakterisieren die Breite Q der Teilchengrößenverteilung, wobei Q = (d₉₀-d₁₀)/d₅₀. Je kleiner Q ist, desto enger ist die Verteilung.

### Beispiele

### Herstellung einer Komponente A:

### Copolymerisat aus Styrol und Acrylnitril

Es wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew.-% in Dimethylformamid) betrug 64 ml/g.

### Herstellung einer Komponente B:

### erstes Pfropfpolymerisat aus vernetztem Poly-n-butylacrylat (Kern) und Polystyrolacrylnitril (Schale)

Zu einer Mischung aus 3 g eines Polybutylacrylat-Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-C₁₂-C₁₈-Paraffinsulfonat in 50 g Wasser gegeben. Die Polymerisation wurde danach noch für 3 Stunden fortgesetzt. Der mittlere Teilchendurchmesser d₅₀ des entstandenen Latex betrug 430 nm bei enger Verteilung der Teilchengröße (Q = 0,1). Der Feststoffgehalt betrug 40 %.

150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser d₅₀ von 510 nm.

Das anfangs eingesetzte Saat-Polymere wurde nach dem Verfahren der EP-B 6503 (Spalte 12, Zeile 55, bis Spalte 13, Zeile 22) durch Polymerisation von n-Butylacrylat und Tricyclodecenylacrylat in wäßriger Emulsion hergestellt und hatte einen Feststoffgehalt von 40 %.

### Herstellung einer Komponente C:

### zweites Pfropfpolymerisat aus Polybutadien (Kern) und Polystyrolacrylnitril (Schale)

### Herstellung der Polybutadien-Emulsion:

Zu einer Mischung aus 150 g Wasser, 1,2 g Na-C₁₂-C₁₈-Paraffinsulfonat, 0,3 g Kaliumpersulfat, 0,3 g Natriumhydrogencarbonat und 0,15 g Natriumpyrophosphat wurden bei 65°C 0,5 g tert. Dodecylmercaptan und 16,6 g Butadien gegeben. Nach 1 Stunde wurden weitere 83,3 g Butadien innerhalb von 5 Stunden zudosiert. 5 Stunden nach Ende der Butadienzugabe wurden 0,5 g tert.-Dodecylmercaptan zugefügt. Nach insgesamt 19 Stunden Reaktionszeit. und einem Umsatz von 96 %, bezogen auf Butadien, betrug der Feststoffgehalt 39 %. Die Teilchengrößenverteilung war wie folgt: d₁₀: 60 nm, d₅₀: 80 nm, d₉₀: 105 µm.

### Agglomeration und Pfropfung:

255 g der Polybutadien-Emulsion wurden bei 65°C mit 74 g Wasser verdünnt und 30 g einer wäßrigen Dispersion (Feststoffgehalt 10 Gew.-%, bezogen auf diese Dispersion) eines Copolymeren aus 96 Gew.-% Ethylacrylat und 4 Gew.-% Methacrylamid zugegeben. Nach der Agglomeration lagen etwa 80 Zahlen-% der Polybutadienteilchen in nicht agglomeriertem Zustand vor. Es lag eine breite bimodale Teilchengrößenverteilung vor: d₁₀: 79 nm, d₅₀: 238 nm, d₉₀: 323 nm. Zu der erhaltenen Emulsion wurde bei 70°C 0,13 g Kaliumpersulfat (als wäßrige 3 gew.-%ige Lösung), 0,02 g tert.-Dodecylmercaptan und 11 g eines Gemisches von 70 Gew.-% Styrol und 30 Gew.-% Acrylnitril gegeben. Nach 10 Minuten wurde ein Gemisch aus 39 g Styrol, 17 g Acrylnitril und 0,1 g tert.-Dodecylmercaptan innerhalb 2 3/4 Stunden zugefügt, wobei die Temperatur auf 75°C anstieg. Nach Beendigung der Monomerzugabe ließ man 1 Stunde nachreagieren. Anschließend wurde das Polymerisat mit einer Calciumchloridlösung bei 95°C ausgefällt, abgetrennt, mit Wasser gewaschen und im warmen Luftstrom getrocknet.

### Komponente D:

Es wurden 4 Gew.-Teile, bezogen auf 100 Gew.-Teile der Summe der Komponenten A), B) und C), Titandioxid als weißes Pigment verwendet.

### Herstellung der Abmischungen und der Formkörper

Die Komponenten A), B), C) und D) wurden in einem üblichen Extruder Typ ZSK 30, Fa. Werner und Pfleiderer, bei 250°C innig vermischt, extrudiert und granuliert.

Das Granulat wurde bei 220°C Schmelztemperatur und 60°C Formtemperatur zu Norm-Kleinstäben (siehe DIN 53 453) gespritzt. Weiterhin wurden bei einer Schmelzetemperatur von 250°C und Formtemperatur von 60°C Rundscheiben von 6 cm Durchmesser und 0,2 cm Dicke gespritzt.

### Untersuchung der Formkörper

Der Schlagzähigkeitsversuch zur Bestimmung der Schlagzähigkeiten wurde an den Norm-Kleinstäben nach DIN 53 453 vorgenommen.

Zur Ermittlung der Witterungsbeständigkeit wurden Norm-Kleinstäbe 48 und 168 Stunden in einem UV-Belichtungsgerät Xenotest 1200 CPS gemäß DIN 53 387 belichtet und anschließend der Schlagzähigkeitsversuch nach DIN 53 453 durchgeführt, wobei Schlag auf die unbelichtete Seite erfolgte.

Zur Ermittlung der Vergilbungsneigung wurden an den Rundscheiben die Gelbwerte gemäß DIN 6167 (Januar 1980) nach 48 Stunden und 336 Stunden Belichtung bestimmt. Die Farbmessung wurde gemäß DIN 53 236, Verfahren B (Januar 1983) vorgenommen. Die Meßgeometrie war 45°/0°, Lichtart/Normalbeobachter: D65/10°.

Unter Gelbwertdifferenz ist die Differenz zum kleinsten gemessenen Gelbwert der jeweiligen Belichtungsreihe zu verstehen.

Die Mischungsverhältnisse in den Polymermischungen sowie die Eigenschaften der aus ihnen hergestellten Formkörper sind der nachstehenden Tabelle zu entnehmen.

**Tabelle**

| Beispiel | 1 | 2V | 3V | 4V |
|---|---|---|---|---|
| Zusammensetzung [Gew.-%]: | | | | |
| A | 83,2 | 83,2 | 66,7 | 71,0 |
| B | 13,8 | 16,8 | 17,5 | - |
| C | 3,0 | - | 15,8 | 29,0 |
| D [Gew.-Teile¹⁾] | 4 | 4 | 4 | 4 |

| Eigenschaften: | | | | |
|---|---|---|---|---|
| Schlagzähigkeit aₙ (25°C), [kJ/m²] | | | | |
| vor Bewitterung | 63 | 29 | n.b. | n.b. |
| nach Bewitterung 48 h | 49 | 31 | n.b. | 8 |
| nach Bewitterung 168 h | 28 | 30 | 9 | 6 |

| Gelbwertdifferenz | | | | |
|---|---|---|---|---|
| nach Belichtung 48 h | 0 | 0,2 | 0,6 | 0,9 |
| nach Belichtung 336 h | 3,1 | 0,4 | 7,5 | 10,3 |

| | | | | |
|---|---|---|---|---|
| ¹⁾ bezogen auf 100 Gew.-Teile der Summe der Komponenten A), B) und C). n.b. nicht bestimmt | | | | |

Die Formteile aus erfindungsgemäßen Formmassen (Beispiel 1) zeigen ein Optimum von hoher Schlagzähigkeit vor Bewitterung, hoher Schlagzähigkeit nach Bewitterung, und geringer Vergilbungsneigung nach Belichtung.

Die Gelbwertdifferenz von Formteilen, enthaltend erfindungsgemäße Mengen des bimodalen Polybutadien-Pfropfkautschuks (Komponente C), ist nach Belichtung zwar geringfügig höher als die Gelbwertdifferenz von Polybutadien-freien Formteilen (Vergleichsbeispiel 2V und Beispiel 1). Jedoch ist die Schlagzähigkeit von Formteilen aus erfindungsgemäßen Formmassen vor Bewitterung mehr als doppelt so hoch und nach 168 h Bewitterung immer noch ebensogut wie die Schlagzähigkeit von Polybutadien-freien Formmassen.

Der Zusatz geringer Mengen Polybutadien-Pfropfkautschuk erhöht demnach die Zähigkeit bei Raumtemperatur beträchtlich.

Formteile aus Formmassen mit einem höheren, nicht erfindungsgemäßen Gehalt an Komponente C) (Vergleichsbeispiele 3V und 4V) weisen nach Bewitterung eine erheblich niedrigere Schlagzähigkeit und eine wesentlich höhere Gelbwertdifferenz auf als Formteile aus den erfindungsgemäßen Formmassen.

Obwohl die erfindungsgemäßen Formmassen erheblich weniger Pfropfkautschuk (Summe von B) und C)) enthalten (Beispiel 1) als das Vergleichsbeispiel 4V, ist ihre Schlagzähigkeit nach Bewitterung erheblich höher.

## Patentansprüche

1. Thermoplastische Formmassen, enthaltend, bezogen auf das Gesamtgewicht der Formmasse,
A) 72 bis 88,5 Gew.-% einer thermoplastischen Polymerisates aus, bezogen auf A),
a1) 50 bis 100 Gew.-% Styrol oder α-Methylstyrol oder deren Mischungen,
a2) 0 bis 50 Gew.-% Acrylnitril,
a3) 0 bis 50 Gew.-% eines oder mehrerer weiter monoethylenisch ungesättigter Monomeren,
B) 10 bis 20 Gew.-% eines ersten Pfropfpolymerisates mit einem mittleren Teilchendurchmesser d₅₀ von 400 bis 600 nm, aus, bezogen auf B),
b1) 30 bis 90 Gew.-% eines kautschukelastischen Pfropfkerns aus, bezogen auf b1),
b11) 80 bis 99,99 Gew.-% n-Butylacrylat,
b12) 0,01 bis 20 Gew.-% mindestens eines vernetzenden Monomeren,ausgewählt aus der Gruppe bestehend aus Dihydrodicyclopentadienylacrylat, Allyester der Acrylsäure und Allyester der Methacyrlsäure,
b13) 0 bis 40 Gew.-% eines oder mehrerer weiterer monoethylenisch ungesättigter Monomeren,
b2) 10 bis 70 Gew.-% einer Pfropfschale aus, bezogen auf b2),
b21) 50 bis 100 Gew.-% Styrol oder α-Methylstyrol oder deren Mischungen,
b22) 0 bis 50 Gew.-% Acrylnitril,
b23) 0 bis 50 Gew.-% eines oder mehrerer weiterer monoethylenisch ungesättigter Monomeren,
C) 1,5 bis 8 Gew.-% eines zweiten Pfropfpolymerisates mit bimodaler Teilchengrößenverteilung, wobei die mittleren Teilchendurchmesser d₅₀ bei 25 bis 200 nm einerseits und 350 bis 550 nm andererseits liegen, aus, bezogen auf C),
c1) 30 bis 90 Gew.-% eines kautschukelastischen Pfropfkerns aus, bezogen auf c1),
c11) 50 bis 100 Gew.-% Butadien oder Isopren oder deren Mischungen,
c12) 0 bis 50 Gew.-% eines oder mehrerer weiterer monoethylenisch ungesättigter Monomeren,
c2) 10 bis 70 Gew.-% einer Pfroptischale aus, bezogen auf c2)
c21) 50 bis 100 Gew.-% Styrol oder α-Methylstyrol oder deren Mischungen,
c22) 0 bis 50 Gew.-% Acrylnitril,
c23) 0 bis 50 Gew.-% eines oder mehrerer weiterer monoethylenisch ungesättigter Monomeren.
D) 0 bis 50 Gew.-% Gleit- oder Entformungsmittel, Pigmente, Farbstoffe, Flammschutzmittel, Antioxidantien, Stabilisatoren gegen Lichteinwirkung, faser- oder pulverförmige Füll- oder Verstärkungsmittel oder Antistatika, oder andere Zusatzstoffe, oder deren Mischungen,
wobei die Summe der Pfropfpolymerisate B) und C) 11,5 bis 25 Gew.-% der Summe der drei Komponenten A), B) und C) ausmacht,
und wobei sich die Summe der vier Komponenten A) bis D) zu 100 Gew.-% ergänzt.

2. Verwendung der thermoplastischen Formmassen gemäß Anspruch 1 zur Herstellung von Gehäuseteilen oder Frontblenden für Haushaltsgeräte, zur Herstellung von Blenden, Schaltern oder Abdeckungen im Elektrosektor oder zur Herstellung von Installationskästen für elektrische Vorrichtungen im Außenbereich, oder anderer Formteile.

3. Gehäuseteile oder Frontblenden für Haushaltsgeräte, Blenden, Schalter oder Abdeckungen im Elektrosektor oder Installationskästen für elektrische Vorrichtungen im Außenbereich, oder andere Formteile, aus thermoplastischen Formmassen gemäß Anspruch 1.

## Claims

1. A thermoplastic molding material containing, based on the total weight of the molding material,
A) from 72 to 88.5 % by weight of a thermoplastic polymer of, based on A),
a1) from 50 to 100 % by weight of styrene or α-methylstyrene or mixtures thereof,
a2) from 0 to 50 % by weight of acrylonitrile and
a3) from 0 to 50 % by weight of one or more further monoethylenically unsaturated monomers,
B) from 10 to 20 % by weight of a first graft polymer having an average particle diameter d₅₀ from 400 to 600 nm, comprising, based on B),
b1) from 30 to 90 % by weight of a rubber-elastic graft core of, based on b1),
b11)from 80 to 99.99 % by weight of n-butyl acrylate,
b12) from 0.01 to 20 % by weight of at least one crosslinking monomer selected from the group consisting of dihydrodicyclopentadienyl acrylate, allyl esters of acrylic acid and allyl esters of methacrylic acid, and
b13) from 0 to 40 % by weight of one or more further monoethylenically unsaturated monomers, and
b2) from 10 to 70 % by weight of a graft shell of, based on b2),
b21) from 50 to 100 % by weight of styrene or α-methylstyrene or mixtures thereof,
b22) from 0 to 50 % by weight of acrylonitrile, and
b23) from 0 to 50 % by weight of one or more further monoethylenically unsaturated monomers,
C) from 1.5 to 8 % by weight of a second graft polymer having a bimodal particle size distribution, the average particle diameter d₅₀ being from 25 to 200 nm on the one hand and from 350 to 550 nm on the other hand,
comprising, based on C),
c1) from 30 to 90 % by weight of a rubber-elastic graft core of, based on c1),
c11) from 50 to 100 % by weight of butadiene or isoprene or mixtures thereof, and,
c12)from 0 to 50 % by weight of one or more further monoethylenically unsaturated monomers, and
c2) from 10 to 70 % by weight of a graft shell of, based on c2),
c21)from 50 to 100 % by weight of styrene or α-methylstryene or mixtures thereof,
c22)from 0 to 50 % by weight of acrylonitrile and
c23)from 0 to 50 % by weight of one or more further monoethylenically unsaturated monomers and
D) from 0 to 50 % by weight of lubricants or mold release agents, pigments, dyes, flameproofing agents, antioxidants, light stabilizers, fibrous or particulate fillers or reinforcing materials or antistatic agents or other additives, or mixtures thereof,
the sum of the graft polymers B) and C) accounting for from 11.5 to 25 % by weight of the sum of the three components A), B) and C),
and the sum of the four components A) to D) being 100 % by weight.

2. The use of a thermoplastic molding material as claimed in claim 1 for the production of housing parts or front panels for household appliances, for the production of panels, switches or covers in the electrical sector or for the production of installation boxes for outdoor electrical apparatuses, or other shaped articles.

3. A housing part or front panel for household appliances, a panel, switch or cover in the electrical sector or an installation box for outdoor electrical apparatuses or another shaped article obtained from a thermoplastic molding material as claimed in claim 1.

## Revendications

1. Masses de moulage thermoplastiques, contenant, par rapport au poids global de la masse de moulage,
A) 72 à 88,5% en poids d'un polymère thermoplastique à base, par rapport à A),
a1) de 50 à 100% en poids de styrène ou d'α-méthylstyrène ou de leurs mélanges,
a2) de 0 à 50% en poids d'acrylonitrile,
a3) de 0 à 50% en poids d'un ou de plusieurs autres monomères monoéthyléniquement insaturés,
B) 10 à 20% en poids d'un premier produit de polymérisation par greffage présentant un diamètre de particules moyen d₅₀ de 400 à 600 nm, à base, par rapport à B),
b1) de 30 à 90% en poids d'un noyau de greffage élastique de type caoutchouc à base, par rapport à b1),
b11) de 80 à 99,99% en poids d'acrylate de n-butyle,
b12) de 0,01 à 20% en poids d'au moins un monomère réticulant, choisi parmi le groupe comprenant de l'acrylate de dihydrodicyclopentadiényle, des esters allyliques de l'acide acrylique et des esters allyliques de l'acide méthacrylique,
b13) de 0 à 40% en poids d'un ou de plusieurs autres monomères monoéthyléniquement insaturés,
b2) de 10 à 70% en poids d'une enveloppe de greffage à base, par rapport à b2),
b21) de 50 à 100% en poids de styrène ou d'α-méthylstyrène ou de leurs mélanges,
b22) de 0 à 50% en poids d'acrylonitrile,
b23) de 0 à 50% en poids d'un ou de plusieurs autres monomères monoéthyléniquement insaturés,
C) 1,5 à 8% en poids d'un deuxième produit de polymérisation par greffage présentant une répartition bimodale des tailles de particules, les diamètres moyens de particules d₅₀ étant, d'une part, de 25 à 200 nm et, d'autre part, de 350 à 550 nm, à base, par rapport à C),
c1) de 30 à 90% en poids d'un noyau de greffage élastique de type caoutchouc à base, par rapport à c1),
c11) de 50 à 100% en poids de butadiène ou d'isoprène ou de leurs mélanges,
c12) de 0 à 50% en poids d'un ou de plusieurs autres monomères monoéthyléniquement insaturés,
c2) de 10 à 70% en poids d'une enveloppe de greffage à base, par rapport à c2),
c21) de 50 à 100% en poids de styrène ou d'α-méthylstyrène ou de leurs mélanges,
c22) de 0 à 50% en poids d'acrylonitrile,
c23) de 0 à 50% en poids d'un ou de plusieurs autres monomères monoéthyléniquement insaturés,
D) 0 à 50% en poids d'agents lubrifiants ou de démoulage, de pigments, de colorants, d'agents de protection contre les flammes, d'antioxydants, de stabilisants contre l'action de la lumière, d'agents de remplissage ou de renforcement fibreux ou pulvérulents ou d'antistatiques, ou d'autres additifs, ou de leurs mélanges,
la somme des produits de polymérisation par greffage B) et C) représentant 11,5 à 25% en poids de la somme des trois composants A), B) et C),
la somme des quatre composants A) à D) se complétant à 100% en poids.

2. Utilisation des masses de moulage thermoplastiques suivant la revendication 1, pour la préparation de pièces de bâtiment ou d'écrans frontaux pour des appareillages domestiques, pour la préparation d'écrans, de commutateurs ou de recouvrements dans le secteur électrique ou pour la fabrication de boîtiers d'installation pour des dispositifs électriques à l'extérieur, ou d'autres pièces de moulage.

3. Pièces de boîtier ou écran frontaux pour des appareillages domestiques, écrans, commutateurs ou recouvrements dans le secteur électrique ou boîtiers d'installation pour des dispositifs électriques à l'extérieur, ou autres pièces de moulage, à base de masses de moulage thermoplastiques suivant la revendication 1.
